# EUROPEAN PATENT APPLICATION

(11) **EP 1 884 779 A2**
(43) Date of publication of application: **06.02.2008**
(21) Application number: 07015117.0
(22) Date of filing: 01.08.2007
(51) Int. Cl.: G01N 35/00

(54) **Method for controlling an automatic analyzer**

(30) Priority: 02.08.2006 JP 2006211042
(71) Applicant: Hitachi High-Technologies Corporation, Tokyo 105-8717 (JP)
(72) Inventor: Mashiko, Yuhachiro, Hitachinaka-shi Ibaraki 312-8504 (JP)
(74) Representative: Strehl Schübel-Hopf & Partner

(57) **Abstract**

Objects of the present invention are to, if an test item group with respect to which a plurality of samples are to be analyzed in common is determined beforehand, improve the work efficiency, eliminate factitious analysis errors, and improve the analysis efficiency, by eliminating the management.of sample identification at the time of ordering.

According to one aspect of the present invention, there is provided a method for ordering using an automatic analyzer, the automatic analyzer comprising: an analyzing unit; a transfer unit for transferring a plurality of samples; a dispensing mechanism for extracting samples from the plurality of samples that are transferred, and then for putting the extracted samples into the analyzing unit; a data storage unit; and a display operation unit through which various kinds of display items including test items are displayed and inputted, the ordering method comprising the steps of: displaying, in the display operation unit, a common test item selection screen that is used to select each common test item with respect to which the plurality of samples are to be inspected in common; and selecting test items on the common test item selection screen so as to create an test item group with respect to which the plurality of samples are to be inspected in common.

## Description

### BACKGROUND OF THE INVENTION

### 1. Field of the Invention

The present invention relates to a method for ordering using an automatic analyzer, and an operation method for operating the automatic analyzer, and more particularly to an ordering method and an operation method that are suitable for consecutive analyses to be performed with respect to a predetermined test item group.

### 2. Description of the Related Art

When samples are analyzed with respect to an test item group by use of an automatic analyzer, it is necessary to specify beforehand test items with respect to which each of the samples are to be analyzed.

For the purpose of allowing an operator to specify test items, a screen used to select test items is provided. The operator can use the test item selection screen to specify, on a sample basis, test items with respect to which the each sample is to be analyzed.

Before samples are put into the automatic analyzer, the test item selection screen is used to select test items beforehand. After the samples are put into the automatic analyzer, the automatic analyzer identifies each of the samples, and then reads out an test item group that is selected for the sample in question. The test item group is determined as test items corresponding to the sample in question, and then the analysis is performed with respect to the determined test items.

For example, when the automatic analyzer fails in the identification of a sample, or when the automatic analyzer fails in reading out the test item group selected for the sample in question, a sample whose test item has not been determined is not analyzed. The sample is taken out from the automatic analyzer just as it is.

This kind of automatic analyzer is disclosed in, for example, JP-A-2005-91277

### SUMMARY OF THE INVENTION

As analyses performed with respect to an test item group by an automatic analyzer, there may also often be a case where all samples are analyzed with respect to the same test item group, for example, at the time of medical checkup.

Also in such a case, the conventional automatic analyzer requires an operator to specify an test item group on a sample basis. In this case, the operator must specify totally the same test item group the number of times that is equivalent to the number of all samples. Therefore, the work efficiency is low.

In addition, because totally the same test item group is specified for a large number of samples by manpower, there is also a possibility that a factitious mistake will cause a different test item to be specified.

For the purpose of solving this problem, means for enabling collective specification of the same test item group for a plurality of samples is also considered.

Even in this case, it is necessary to manage identification of each sample. If a sample is specified by mistake on an test item selection screen, when the automatic analyzer identifies the sample, an test item group corresponding to the sample in question cannot be read out. As a result, test items corresponding to the sample in question are not determined, and accordingly analysis thereof is not performed, which was the problem to be solved.

Moreover, even if an test item is correctly specified for a sample, if the automatic analyzer fails in the identification of the sample due to a stain on a sample bar code, a failure in a bar code.reader, or the like, after the sample is put into the automatic analyzer, an test item group corresponding to the sample in question cannot be read out. As a result, test items corresponding to the sample in question are not determined, and accordingly analysis thereof is not performed, which was the problem to be solved.

Objects of the present invention are to, if an test item group with respect to which a plurality of samples are to be analyzed in common is determined beforehand, improve the work efficiency, eliminate factitious analysis errors, and improve the analysis efficiency, by eliminating the management of sample identification at the time of ordering.

According to one aspect of the present invention, there is provided a method for ordering using an automatic analyzer, the automatic analyzer comprising:
an analyzing unit;
a transfer unit for transferring a plurality of samples;
a dispensing mechanism for extracting samples from the plurality of samples that are transferred, and then for putting the extracted samples into the analyzing unit;
a data storage unit; and
a display operation unit through which various kinds of display items including test items are displayed and inputted,
the ordering method comprising the steps of:
displaying, in the display operation unit, a common test item selection screen that is used to select each common test item with respect to which the plurality of samples are to be inspected in common; and
selecting test items on the common test item selection screen so as to create an test item group with respect to which the plurality of samples are to be inspected in common.

According to the present invention, workloads for data input at the time of specifying test items, and at the time of identifying samples, are remarkably reduced. As a result, the work efficiency is improved.

### Brief Description of the Drawings

Fig. 1 is a diagram schematically illustrating a configuration of an automatic analyzer according to an embodiment of the present invention;
Fig. 2 is a diagram illustrating a common test item selection screen according to a first embodiment of the present invention;
Fig. 3 is a diagram illustrating a common test item selection screen according to a second embodiment of the present invention, the common test item selection screen enabling an operator to specify a title of a common test item group;
Fig. 4 is a diagram illustrating an example in which a common test item group is selected by use of a common test item selection screen according to the second embodiment of the present invention, the common test item selection screen enabling an operator to.select a title of the common test item group; and
Fig. 5 is a diagram illustrating a common test item selection screen according to a third embodiment of the present invention, the common test item selection screen enabling an operator to specify a title of a common test item group, and.conditions for analysis to be performed with respect to the common test item group.

### DETAILED DESCRIPTION OF THE PREFERRED EMBODIMENTS

Before describing embodiments of the present invention, feature points (former paragraph) and advantages (latter paragraph) will be summarized.

In order to achieve the above-described objects of the present invention, the present invention provides a common test item selection screen that is used to select an test item group with respect to which all samples are to be analyzed in common.

One of the characteristics of the common test item selection screen is that it is not necessary to select an test item group on a sample basis.

After an test item group, with respect to which all samples are to be analyzed in common, is selected on the common test item selection screen, if samples are' put into an automatic analyzer, all of the samples are analyzed with respect to the selected common test item group.

After the samples are put into the automatic analyzer, during identification processing of identifying each of the samples by the automatic analyzer, even if the automatic analyzer fails in the identification of the sample in question due to a stain on a sample bar code, a failure in a bar code reader, or the like, the common test item group selected on the common test item selection screen is determined as test items corresponding to the sample in question. Then, the analysis is performed with respect to the determined test items.

It is possible to select a plurality of common test item groups on the common test item selection screen. It is also possible to further select one common test item group from among the plurality of common test item groups on the basis of conditions so that the analysis is performed with respect to the selected common test item group in question.

On the common test item selection screen, the conditions under which the one of the plurality of common test item groups is selected can be selected for each of the plurality.of common test item groups.

According to the above-described characteristics, there are advantages as follows.

According to the present invention, independently of the management of sample identification, it becomes possible to select a common test item group with respect to which samples are to be analyzed. Therefore, in particular, when a large number of samples are analyzed with respect to the common test item group, the efficiency in selection work of test items is improved.

In addition, because it is not necessary to manage the sample identification at the time of selecting test items, factitious mistakes caused by the sample identification management are eliminated.

Moreover, even if the automatic analyzer fails in the identification of a sample, the sample is analyzed with respect to the selected common test item group. Therefore, an operator has only to perform the identification processing of the sample in question after the analysis thereof. This avoids the necessity for performing the analysis again, and accordingly the efficiency in the analysis is improved.

Embodiments of the present invention will be described with reference to the accompanying drawings as below.

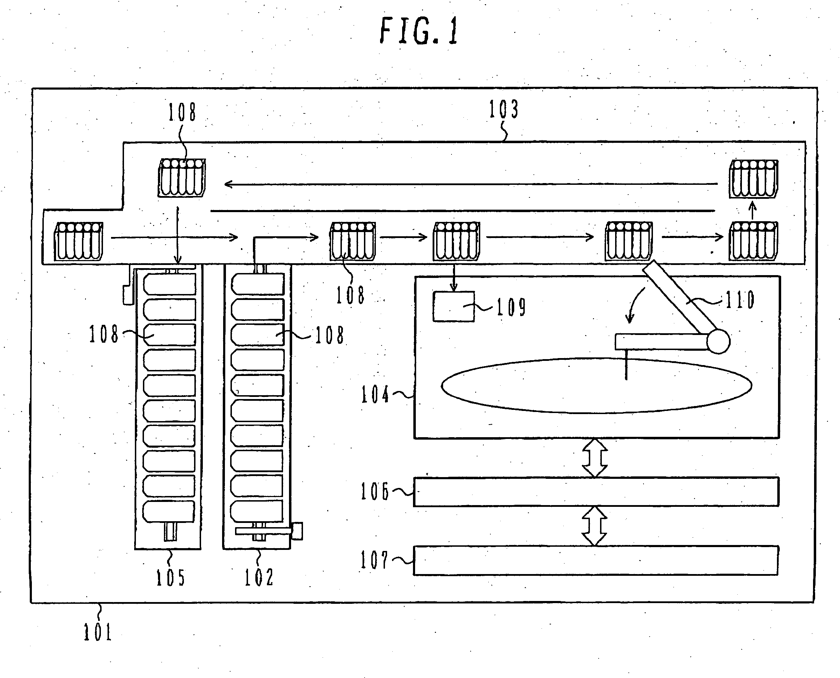

First of all, Fig. 1 is a diagram illustrating an overall configuration of an automatic analyzer in which samples are supplied by a rack method.

An automatic analyzer 101 includes: a rack supplying unit 102 for putting racks 108, each of which holds samples, into the automatic analyzer; a rack transfer unit 103 for successively transferring racks 108, each of which holds samples, inside the automatic analyzer; an analyzing unit 104 for analyzing each sample with respect to a selected test item group; a rack storing unit 105 for storing the racks 108 for which extraction of samples required for the analysis has been completed; a data storage unit 106 for storing data required for analysis, and the result of the analysis; a display operation unit 107 for managing transmission/receiving of data between man and machine through a GUI; various kinds of function means; and control means for performing control.

An test item with respect to which analysis is to be performed is selected by the operator through the GUI included in the display operation unit 107. The selected test item is then stored in the data storage unit 106.. The rack 108, which holds samples to be inspected, is set in the rack supplying unit 102. Then, the rack 108 is sent out to the rack transfer unit 103.

The rack 108 sent out to the rack transfer unit 103 is first subjected to rack identification and sample identification that are performed by an identification device 109 such as a bar code reader.

After that, the test item, with respect to which the samples in question are to be analyzed, is read out from the data storage unit 106. Then, a dispensing mechanism 110 extracts samples required for the analysis, before the analyzing unit 104 performs the analysis of the extracted samples. The rack 108 for which the extraction of the samples required for the analysis has been completed is transferred by the rack transfer unit 103, and is then stored in the rack storing unit 105.

### First Embodiment

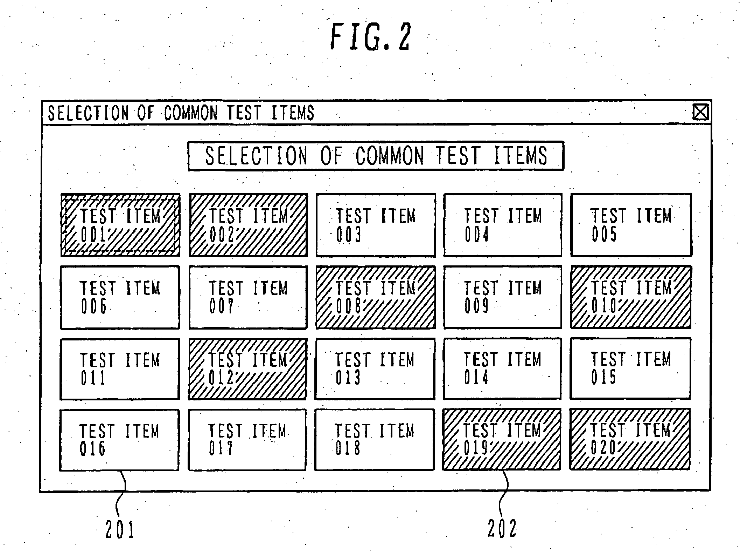

A first embodiment of the present invention will be described with reference.to Fig. 2.

Fig. 2 is a diagram illustrating a common test item selection screen that is used to select each test item with respect to which all samples are to be analyzed in common. The display operation unit 107 of the automatic analyzer 101 is provided with the common test item selection screen. The control means, or the like, includes the function means for displaying, on the display operation unit 107, various kinds of screens including the common test item selection screen.

For each test item group with respect to which analysis can be performed by the automatic analyzer, each selectable button 201 corresponding to each test item is located in the common test item selection screen.

By selecting the button 201 so as to bring the button 201 into a selected state 202, the operator can select an test item corresponding to the button in question as an test item with respect to which all samples are to be analyzed in common.

The function means for creating such an test item group is included in the control means, or the like.

The common test item group selected on the common test item selection screen is stored in the data storage unit 106 of the automatic analyzer 101.

After that, the rack 108, which holds the samples to be inspected, is set in the rack supplying unit 102. Then, the rack 108 is sent out to the rack transfer unit 103. The rack 108 sent out to the rack transfer unit 103 is first subjected to the rack and sample identification performed by the identification device 109. However, if the common test item group has been selected on the common test item selection screen, the selected common test item group, with respect to which analysis is to be performed, is read out from the data storage unit 106 irrespective of whether or not each sample can be identified. Then, the dispensing mechanism 110 extracts samples required for the analysis in question, before the analyzing unit 104 performs the analysis of the extracted samples.

As a result, even if the automatic analyzer fails in the identification of the sample in question due to a stain on a sample bar code, a failure in a bar code reader, or the like, the common test item group selected on the common test item selection screen can be determined as test items corresponding to the sample in question. Accordingly, the analysis can be performed with respect to the determined test items.

Irrespective of whether or not the identification can be performed by the identification device, the control means, or the like, analyzes all samples with respect to the common test item group.

In addition, because the operator uses the above-described common test item selection screen, the operator is relieved from the management of the sample identification. Therefore, without being conscious of samples, the operator can select test items with respect to which the analysis is to be performed.

### Second Embodiment

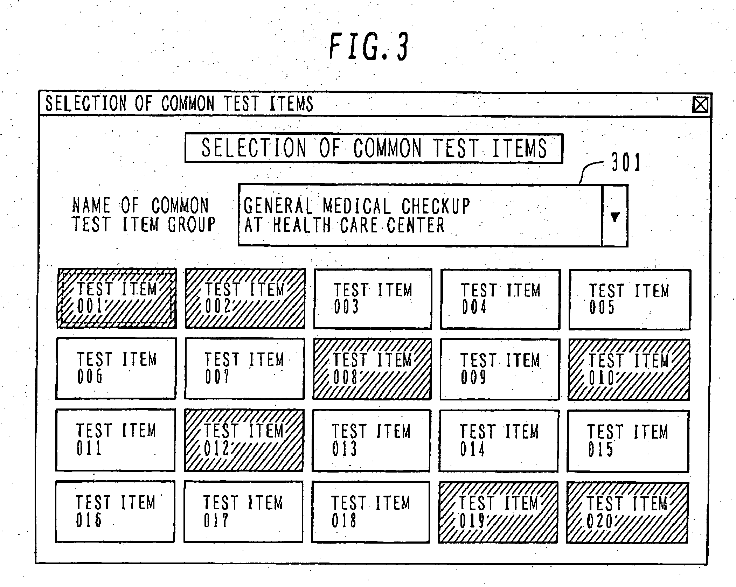

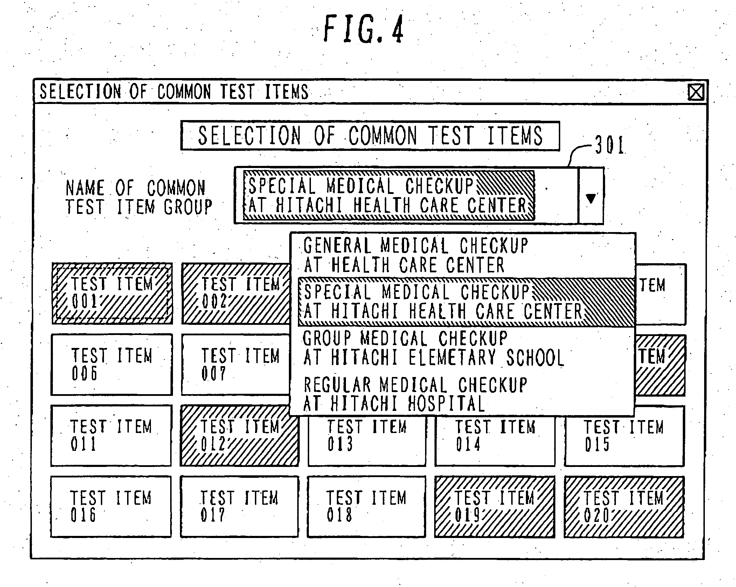

A second embodiment of the present invention will be described with reference to Figs. 3 and 4.

Fig. 3 is a diagram illustrating the common test item selection screen according to the first embodiment, the common test item selection screen further including a common test item group name inputting field 301.

When the operator selects an test item group with respect to which all samples are to be analyzed in common, the operator inputs a uniquely identifiable identifier of the selected test item group in question into the common test item group name inputting field 301.

Similarly, the operator selects another test item group with respect to which all samples are to be analyzed in common, and then inputs a uniquely identifiable identifier of the selected test item group in question into the common test item group name inputting field 301.

By repeating the same operation a plurality of times, it is possible to select a plurality of patterns of various test item groups.with respect to which all samples are to be analyzed in common.

The patterns of the various kinds of common test item groups selected on the common test item selection screen are stored in the data storage unit 106 of the automatic analyzer 101.

By inputting a common test item group name corresponding to the test item group pattern in question into the common test item group name inputting field 301, the operator selects an test item group with respect to which all samples are to be analyzed in common.

Fig. 4 is a diagram illustrating the common test item selection screen in which one common test item group name selected from among a plurality of common test item group names, which have been provided beforehand, is inputted into the common test item group name inputting field 301, and then an test item group pattern corresponding to the common test item group name in question is selected as an test item group with respect to which all samples are to be analyzed in common.

This common test item selection screen enables the operator to properly switch the test item group with respect to which all samples are to be analyzed in common, and then to perform the analysis with respect to the switched test item group.

### Third Embodiment

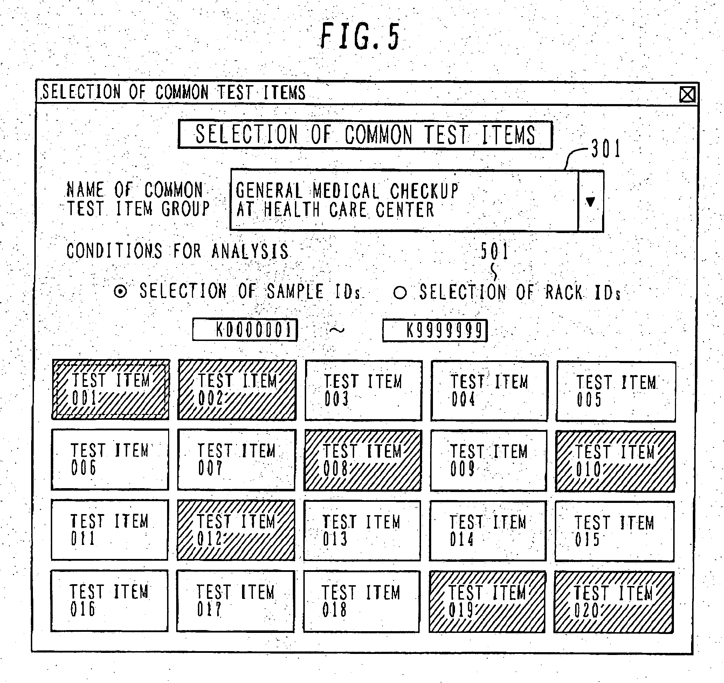

A third embodiment of the present invention will be described with reference to Fig. 5.

Fig. 5 is a diagram illustrating the common test item selection screen according to the second embodiment, the common test item selection screen further including a conditions-for-analysis setting field 501.

When the operator selects an test item group with respect to which all samples are to be analyzed in common, the operator sets, in the conditions-for-analysis setting field 501, conditions for analysis to be performed with respect to the selected test item group pattern.

As an example of the conditions for analysis, Fig. 5 shows an example in which on the assumption that sample IDs of samples range from K0000001 to K9999999, analysis is performed with.respect to an test item group pattern titled "General medical checkup at Health Care Center", which is selected in the common test item group name inputting field 301.

For each of the plurality of common test item group patterns, conditions for analysis to be performed with respect to the common test item group pattern in question are specified through the same operation.

The conditions for analysis specified on the above-described screen, arid the common test item group pattern corresponding to the conditions for analysis, are stored in the data storage unit 106 of the automatic analyzer 101.

After that, samples to be inspected are put into the automatic analyzer 101, and then the plurality of common test item group patterns, which have been selected on the common test item selection screen, are read out from the data storage unit 106. Then, in response to the conditions for analysis to be performed with respect to the common test item group pattern, which have been specified for each of the common test item group patterns, a common test item group pattern is uniquely selected, and analysis is performed with respect to the common test item group pattern in question.

As a result, even in the case of analysis that uses a plurality of common test item group patterns, with each of the plurality of common test item group patterns being properly used, it is possible to perform the analysis in the same analysis routine without stopping the analysis routine every time each of the common test item group patterns is switched.

## Claims

1. A method for ordering using an automatic analyzer, said automatic analyzer comprising:
an analyzing unit;
a transfer unit for transferring a plurality of samples;
a dispensing mechanism for extracting samples from the plurality of samples that are transferred, and then for putting the extracted samples into said analyzing unit;
a data storage unit; and
a display operation unit through which various kinds of display items including test items are displayed and inputted;
said ordering method comprising:
a step of displaying, in said display operation unit, a common test item selection screen that is used to select each common test item with respect to which the plurality of samples are to be inspected in common; and
a step of selecting test items on the common test item selection screen so as to create an test item group with respect to which the plurality of samples are to be inspected in common.

2. The method for ordering using the automatic analyzer according to Claim 1, wherein:
the plurality of test item group patterns can be specified.

3. The method for ordering using the automatic analyzer according to Claim 2, wherein:
it is possible to select one test item group pattern from among the plurality of specified test item group patterns before analysis.

4. The method for ordering using the automatic analyzer according to Claim 2, wherein:
it is possible to specify conditions for analysis to be performed with respect to each of the plurality of specified test item group patterns.

5. The method for ordering using the automatic analyzer according to Claim 4, wherein:
conditions for analysis to be performed with respect to each of the plurality of specified test item group patterns are specified before analysis, and each test item group pattern which satisfies conditions for analysis is successively selected at the time of analysis, and then a plurality of samples are analyzed with respect to the selected test item group pattern.

6. An operating method for operating an automatic analyzer, said automatic analyzer comprising:
an analyzing unit;
a transfer unit for transferring a plurality of samples;
a dispensing mechanism for extracting samples from the plurality of samples that are transferred, and then for putting the extracted samples into said analyzing unit;
an identification device for identifying each of the plurality of samples that are being transferred;
a data storage unit; and
a display operation unit through which various kinds of display items including test items are displayed and inputted;
said operating method comprising:
a step of displaying, in the display operation unit, a common test item selection screen that is used to select each common test item with respect to which the plurality of samples are to be inspected in common;
a step of selecting test items on the common test item selection screen so as to create an test item group with respect to which the plurality of samples are to be inspected in common;
a step of transferring a .plurality of samples to be inspected by the transfer unit; and
a step of extracting samples from the plurality of samples by said dispensing mechanism, and then analyzing the extracted samples with respect to the test item group, irrespective of whether or not said identification device has successfully identified the plurality of samples.

7. An automatic analyzer comprising:
an analyzing unit;
a transfer unit for transferring a plurality of samples;
a dispensing mechanism for extracting samples from the plurality of samples that are transferred, and then for putting the extracted samples into said analyzing unit;
a data storage unit; and
a display operation unit through which various kinds of display items including test items are displayed and inputted;
said automatic analyzer further comprising:
function means for displaying, in said display operation unit, a common test item selection screen that is used to select each common test item with respect to which the plurality of samples are to be inspected in common;
function means for selecting test items on the common test item selection screen so as to create an test item group with respect to which the plurality of samples are to be inspected in common;
an identification device for identifying each of the plurality of samples that are being transferred; and
control means for controlling the execution of analysis so that irrespective of whether or not said identification device has successfully identified the plurality of samples, samples are extracted from the plurality of samples by said dispensing mechanism, and then the extracted samples are analyzed with respect to the test item group.
